# EUROPÄISCHE PATENTSCHRIFT

(11) **EP 0 920 613 B1**
(45) Veröffentlichungstag und Bekanntmachung des Hinweises auf die Patenterteilung: **02.10.2002**
(21) Anmeldenummer: 97935487.5
(22) Anmeldetag: 26.07.1997
(51) Int. Cl.: G01N 1/06

(54) **SCHEIBEN-MIKROTOM**
DISC-MICROTOME
MICROTOME A DISQUE

(30) Priorität: 29.07.1996 DE 19630382; 29.07.1996 DE 29612938 U
(43) Veröffentlichungstag der Anmeldung: 09.06.1999
(73) Patentinhaber: Leica Microsystems Nussloch GmbH, 69222 Nussloch (DE)
(72) Erfinder: WALTER, Roland, D-68804 Altlu heim (DE); BIEHL, Manfred, D-74909 Meckesheim (DE); VIERLING, Jürgen, D-69214 Eppelheim (DE); LAUDAT, Andreas, D-69493 Hirschberg (DE); SCHECK, Peter, D-69231 Rauenberg (DE)
(74) Vertreter: Stamer, Harald
(86) Internationale Anmeldenummer: DE9701579
(87) Internationale Veröffentlichungsnummer: WO98004898

(56) Entgegenhaltungen:
- DE-A- 4 205 258
- DE-A- 4 307 738
- DE-C- 263 871
- DE-C- 3 347 238
- US-A- 3 884 563
- US-A- 4 691 151

## Beschreibung

Die Erfindung betrifft ein Mikrotom, gemäß dem Oberbegriff des Patentanspruchs 1.

Aus der DE 31 44 120 A1 ist ein Schlittenmikrotom bekannt, welches ein Grundbett und einen über Gleitschienen bewegbaren Schlitten enthält. Das Schneidmesser ist hier ortsfest auf dem Grundbett befestigt, wobei der Präparathalter auf dem Schlitten angeordnet ist. Zur Schnittherstellung wird der Schlitten entlang seiner Führung manuell auf dem Grundbett bewegt.

Es sind jedoch auch Schlittenmikrotome bekannt, bei denen das Schneidmesser auf dem Schlitten und der Präparathalter ortsfest am Grundbett montiert sind.

Bei beiden Arten von Schlittenmikrotomen erfolgt der Schnitt des Präparates über eine Relativbewegung zwischen dem Schneidmessers und dem Objekt.

Eine andere Art von Mikrotomen ist aus der DE 195 31 524 C1 bekannt. Das in dieser Schrift beschriebene Rotationsmikrotom weist einen Objektschlitten mit einem daran angeordneten Objekthalter für die zu schneidende Probe auf. In einer vertikalen Bahn wird der Objekthalter am Rotationsmikrotom auf- und abbewegt. Die Probe wird bei dieser Bewegung über ein am Rotationsmikrotom fest angeordnetes Messer geführt.

Auch hier erfolgt der Schnitt des Präparates über eine Relativbewegung zwischen dem Schneidmessers und dem Objekt. Bei beiden bekannten Arten von Mikrotomen ist es nach einem erfolgten Schnitt dann notwendig, das Objekt bzw. das Schneidmesser in die Ausgangslage zurückzuführen. Zur Erzielung von sauberen Präparatschnitten ist es dabei unbedingt erforderlich ist, bei der Rückstellung eine Kollision des Schneidmessers mit dem Präparat zu vermeiden. Dies erfolgt in beiden Fällen dadurch, daß das Schneidmesser bzw. das Präparat über eine Zustelleinrichtung um einen bestimmten Betrag zurückgezogen wird und so das bewegte Bauteil an dem feststehenden Bauteil vorbeigeführt wird. Bei einem weiteren Schnitt wird das Präparat bzw. das Schneidmesser um diesen bestimmten Betrag plus der eingestellten Schnittdicke wieder zugestellt.

Beide Arten von Mikrotomen haben sich in der Praxis bewährt. Bedingt durch die notwendige Rückstellung nach einem erfolgten Schnitt in eine Ausgangslage, lassen sich mit derartigen Mikrotomen keine schnellen Schnittfolgen erreichen. Hinzu kommt, daß durch diese oszillierenden Bewegungen große Kräfte bei der Beschleunigung bzw. Verzögerung der bewegten Bauteile auftreten, die mit hohem mechanischem Aufwand kompensiert werden müssen. Andernfalls besteht die Gefahr, daß Vibrationen auf das Mikrotom übertragen und damit unbrauchbare Dünnschnitte erzielt werden.

Aus der Druckschrift "Leica SP 1600 - Saw Microtome, Instruction Manual, V0.0 English -11/86, der Leica Instruments GmbH" ist ein Sägemikrotom zum schneiden von sehr harten Objekten, wie Knochen, Keramic etc. bekannt. Als Schneidmesser weist das Sägemikrotom eine diamantbestückten Innenlochsäge auf, die mit 600 U/min rotiert. Das zu schneidende Objekt ist zusammen mit dem Objekthalter auf einem drehbeweglichen Arm angeordnet. Zur Durchführung eines Säge-Schnittes wird der Arm in Richtung der Innenlochsäge extrem langsam geschwenkt. Nach dem Säge-Schnitt muß der Arm wieder zurückbewegt werden. Ein kontinuierliches Schneiden sowie das Schneiden von Gewebeproben ist mit diesem Mikrotom nicht möglich.

Aus der DE 26 40 966 A1 und der JP 63-241442 A sind Schneidvorrichtungen bekannt, bei denen ein scheibenförmig ausgebildetes Schneidmesser von einem Motor angetrieben wird. Derartige Anordnung werden zur Herstellung von Dünnschnitten von sehr harten Materialien, wie Knochen, verwendet.

Aus der DE-PS 263 871 ist ein Mikrotom mit einem feststehenden Messer und einem rotierenden Objekthalter bekannt. Das Schneidmesser ist in einem Messerhalter angeordnet, der über mechanische Mittel zur Einstellung der Schnittdicke auf den Objekthalter zugestellt wird. Das beschriebene Mikrotom weist als Antrieb lediglich eine Handkurbel auf.

Aus der AT 172 605 und der US 3 191 477 ist jeweils ein Mikrotom mit einer drehbar gelagerten Scheibe bekannt. An der Stirnseite der Scheibe ist ein Präparathalter angeordnet, so daß die Drehachse der Scheibe angenähert senkrecht zur Schnittebene vorgesehen ist. Bei dieser Anordnung wird das Objekt auf einer Kreisbahn am Schneidmesser vorbeigeführt, wodurch der Schnitt ein zylinderförmiges Profil erhält. Dieses zylindrische Profil ist jedoch in vielen Fällen bei einer nachfolgenden mikroskopischen Betrachtung unbrauchbar, da der Schnitt plan unter das Mikroskop gebracht werden muß.

Aus der DD 5 620 ist ein motorisch angetriebener, umlaufender Messerträger bekannt, bei dem der Objekthalter über eine Exzenterscheibe und einen daran angreifenden Hebel zugestellt wird. Bei dieser Anordnung ist eine parallele Anordnung von Objekt und Messer während des Schnittvorganges gegeben. Die Zustellung des Objektes erfolgt jedoch nicht mit einem linearen Bauelement, sondern über einen Hebel und eine Exzenterscheibe.

In der US 3 884 563 wird ein Mikrotom mit einem motorisch angetriebenen umlaufender Messerträger beschrieben, bei dem der Objekthalter über einen Schlitten zugestellt wird. Das Mikrotom weist femer einen Kryostaten und eine Filmkamera auf, mit der die Probe während des Schneidens gefilmt wird. Die Schnitte werden bei diesem Mikrotom nicht weiterverwertet, sondern über einen Sammelbehälter entsorgt.

In der US 2 753 761 und der GB-PS 654 123 werden Scheibenmikrotome beschrieben, bei denen der Objekthalter auf einer Scheibe und der Messerhalter feststehend am Mikrotom angeordnet ist. Die Schnittzustellung erfolgt hier über eine Parallelverschiebung der Scheibe zum Grundbett über ein Thermoelement und eine Spindel bzw. über eine Parallelverschiebung des Messerhalters am Grundbett. Eine motorisch konrollierte Zustellung ist hier nicht vorgesehen.

Aus der US 3 902 390 ist ein Taschenmikrotom bekannt, bei dem das Schneidmesser auf einem drehbeweglich gelagerten Arm angeordnet ist und über eine Feder manuell vorgespannt wird. Dieses Mikrotom ist für den portablen Einsatz konzpiert und für die Durchführung von Serienschnitten ungeeignet.

Es ist daher Aufgabe der vorliegenden Erfindung, die Relativbewegung zwischen dem Schneidmesser des Mikrotoms und dem Objekt zu optimieren und dabei eine schnelle und präzise Schnittfolge zu gewährleisten.

Diese Aufgabe wird erfindungsgemäß durch die im kennzeichnenden Teil des Patentanspruches 1 angegebenen Merkmale gelöst. Weitere vorteilhafte Weiterbildungen sind Gegenstand der Unteransprüche.

Durch das rotierende Bauelement, auf dem das Objekt angeordnet ist, wird erreicht, daß nach einem ersten Schnitt keine Rückstellung des Messers bzw. des Objektes erfolgen muß. Damit entfällt die Umkehrbewegung zur Rückstellung des Mikrotoms in seine Ausgangslage und der mechanische Aufwand zur Vermeidung von Vibrationen läßt sich minimieren.

Ein weiter Vorteil liegt darin, daß im Gegensatz zu den bekannten Scheiben-Mikrotomen eine motorisch gesteuerte Zustellung für die Einstellung der Schnittdicke vorgesehen ist. Über eine Steuerschaltung lassen sich so auch unterschiedliche Schnittdicken bei einem einzigen Präparat vorwählen.

In einer weiteren Ausgestaltung der Erfindung ist vorgesehen, mehrere Objekthalter auf dem rotierenden Bauelement anzuordnen, um so mehrere Schnitte gleichzeitig auszuführen. Dabei können die Objekthalter mit den zu schneidenden Objekten nebeneinander am äußeren Umfang des rotierenden Bauelemnts gruppiert sein als auch nebeneinander in Richtung des Scheibenmittelpunktes.

Bei der Anordnung von mehreren Objekten ist es auch möglich, diese Objekte in einer ersten Phase gemeinsam anzuschneiden, d.h. alle Objekte werden bei einer einzigen Umdrehung des Bauelements geschnitten.

Durch die Anordnung eines Winkelcodieres an dem rotierenden Bauelement läßt sich die Stellung der Objekte zum Schneidmesser ermitteln. Über die Steuerschaltung ist es dann möglich, die Schnittreihenfolge und die Schnittdicke für jedes einzelne Objekt individuell vorzuwählen. Voraussetzung für diese individuelle Vorwahl ist jedoch, daß der Abstand zwischen dem Schneidmesser und dem Objekt laufend veränderbar ist. Dies wird damit erreicht, daß über den Winkelcodierer die Scheibenstellung ermittelt und über den motorischen Vorschub und die Steuerschaltung die Stellung des Schneidmessers oder des Objektes bei rotierender Scheibe laufend verändert wird.

Dadurch wird erreicht, daß über die Steuerschaltung die Reihenfolge der zu schneidenden Proben individuell vorgewählt werden kann und dabei zusätzlich eine entsprechende Schnittdicke einzeln einstellbar ist.

Die Erfindung wird anhand von Ausführungsbeispielen mit Hilfe der schematischen Zeichnung näher erläutert. Es zeigen:
- Fig. 1a:: eine Seitenansicht des Scheiben-Mikrotoms mit starrem Messerhalter und horizontal verschiebbarer Scheibe
- Fig. 1 b:: eine Vorderansicht des Scheiben-Mikrotoms nach Figur 1a
- Fig. 2a:: eine Seitenansicht des Scheiben-Mikrotoms mit starrem Messerhalter und vertikal verschiebbarer Scheibe
- Fig. 2b:: eine Vorderansicht des Scheiben-Mikrotoms nach Figur 2a
- Fig. 3a:: eine Seitenansicht des Scheiben-Mikrotoms mit starrem Messerhalter und einer entlang der Drehachse verschiebbaren Scheibe
- Fig. 3b:: eine Vorderansicht des Scheiben-Mikrotoms nach Figur 3a
- Fig. 4a:: eine Seitenansicht des Scheiben-Mikrotoms mit parallel zur Scheiben-Drehachse verschiebbarem Messerhalter
- Fig. 4b:: eine Vorderansicht des Scheiben-Mikrotoms nach Figur 4a
- Fig. 5a:: eine Seitenansicht des Scheiben-Mikrotoms mit senkrecht verschiebbarem Messerhalter
- Fig. 5b:: eine Vorderansicht des Scheiben-Mikrotoms nach Figur 5a
- Fig. 6a:: eine Seitenansicht des Scheiben-Mikrotoms mit horizontal verschiebbarem Messerhalter
- Fig. 6b:: eine Vorderansicht des Scheiben-Mikrotoms nach Figur 6a
- Fig. 7a:: eine Seitenansicht des Scheiben-Mikrotoms mit motorischer Zustellung, einer Steuerschaltung, einem Winkelcodierer und mehreren auf der Scheibe angeordneten Objekten
- Fig. 7b:: eine Vorderansicht des Scheiben-Mikrotoms nach Figur 7a

Die Figur 1a zeigt eine Seitenansicht eines Scheiben-Mikrotoms 1 mit einem Grundbett 2 und einem auf dem Grundbett 2 angeordneten Basisteil 10, das einen Messerhalter 3 zur Aufnahme eines Schneidmessers 4 trägt. Am Grundbett 2 ist ferner ein Zustellschlitten 9 angeordnet, der in Doppelpfeilrichtung bewegbar ausgebildet ist Der Zustellschlitten 9 trägt ein Gestell 8, an dem ein rotierendes Bauelement 7 in Form einer Scheibe über eine Drehachse 16 und ein Wälzlager drehbar befestigt ist. Auf der Scheibe 7 ist exzentrisch ein Objekthalter 5 zur Aufnahme eines zu schneidenden Objekts 6 angeordnet. Durch eine Verschiebung des Zustellschlittens 9 läßt sich der Abstand zwischen dem feststehenden Schneidmesser 4 und der Scheibe 7 bzw. dem Objekt 6 verändern. Durch die aufeinander abgestimmte winklige Anordnung des Schneidmessers 4 und der Scheibe 7 zum Grundbett 2, wird bei dieser Verstellung die Scheibenoberfläche bzw. die Probe 6 immer parallel zur Schneide des Messers 4 verstellt.

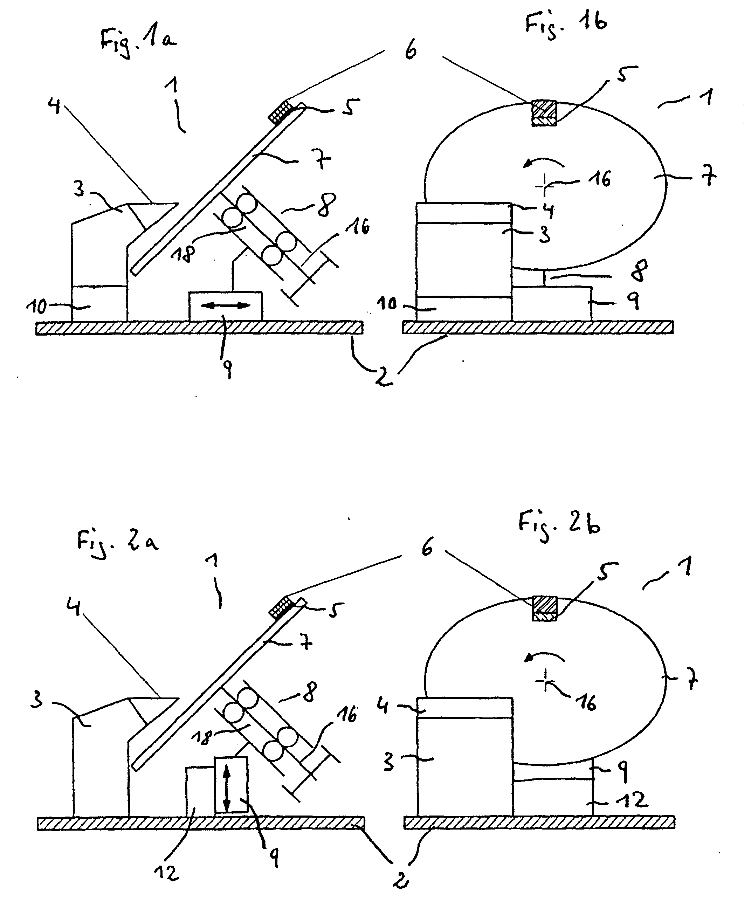

Die Figur 1b zeigt die Anordnung gemäß der Figur 1a in einer Vorderansicht. Aus dieser Ansicht wird deutlich, daß das Objekt 6 durch die Rotation der Scheibe 7 in Pfeilrichtung über das Schneidmesser 4 geführt wird und so die über den Zustellschlitten 9 eingestellte Schnittdicke vom Objekt 6 abgetragen wird. Nach einem erfolgten Schnitt rotiert die Scheibe 7 weiter in Pfeilrichtung und die Scheibe 7 wird während dieser Rotationsbewegung über die Zustelleinrichtung 9 in Richtung des Schneidmessers 4 bewegt. Die Zustellbewegung erfolgt immer nach einem durchgeführten Schnitt.

Die Figur 2a zeigt eine Seitenansicht des Scheiben-Mikrotoms 1 analog zur Figur 1a, wobei hier die Zustellschlitten 9 an einem Lagerbock 12 angeordnet und in Doppelpfeilrichtung senkrecht zum Grundbett 2 verschiebbar gelagert ist. Der Lagerbock 12 ist dabei am Grundbett 2 des Scheiben-Mikrotoms 1 befestigt.

Die Figur 2b zeigt eine Seitenansicht der Figur 2a mit dem Lagerbock 12 und dem Zustellschlitten 9. In diesem Ausführungsbeispiel wird ebenfalls die Scheibe 7 bzw. das Objekt 6 parallel zur Schneide des Messers 4 verstellt.

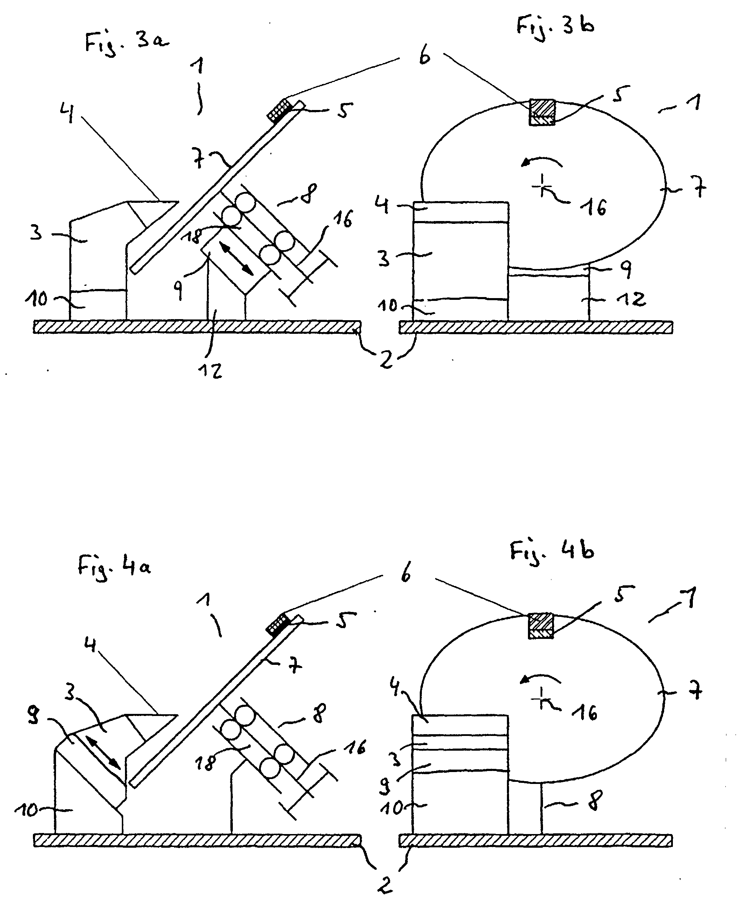

Die Figur 3a eine Seitenansicht des Scheiben-Mikrotoms 1 analog zu den Figuren 1a und 2a, wobei in diesem Ausführungsbeispiel der Zustellschlitten 9 direkt und parallel zur Drehachse 16 an dem Gestell 8 angeordnet ist. Der Zustellschlitten 9 wird von dem Lagerbock 12 getragen, der feststehend auf dem Grundbett 2 befestigt ist. Bei dieser Anordnung entspricht die Drehachse 16 der Scheibe 7 gleichzeitig die Verschieberichtung der Scheibe 7 in Doppelpfeilrichtung.

Die Figur 3b zeigt eine Seitenansicht der Figur 3a mit dem Lagerbock 12 und dem Zustellschlitten 9, wobei die Scheibe 7 bzw. das Objekt 6 parallel zur Schneide des Messers 4 über den Zustellschlitten 9 verstellt wird.

Die Figur 4a zeigt eine Seitenansicht des Scheiben-Mikrotoms 1 mit dem am Grundbett 2 feststehend angeordneten Gestell 8, welches die Scheibe 4 mit dem Objekthalter 5 und dem Objekt 6 trägt. Der Messerhalter 3 ist zusammen mit dem Schneidmesser 4 in Doppelpfeilrichtung verschieblich auf dem Zustellschlitten 9 befestigt, wobei der Zustellschlitten 9 auf einem Basisteil 10 angeordnet ist. Das Basisteil 10 ist feststehend am Grundbett 2 des Mikrotoms 1 angeordnet. Die Verschieberichtung des Messerhalters 3 fällt durch die abgewinkelte Bauform des Basisteils 10 mit der Drehachse 16 der Scheibe 4 zusammen, so daß die Schneide des Messers 4 parallel zur Oberfläche der Scheibe 4 zugestellt werden kann.

Die Figur 4b zeigt eine Seitenansicht der Figur 4a mit dem Basisteil 10, dem daran angeordneten Zustellschlitten 9, dem Messerhalter 3 zur Aufnahme des Schneidmessers 4. Das Gestell 8 ist fest mit dem Grundbett 2 verbunden.

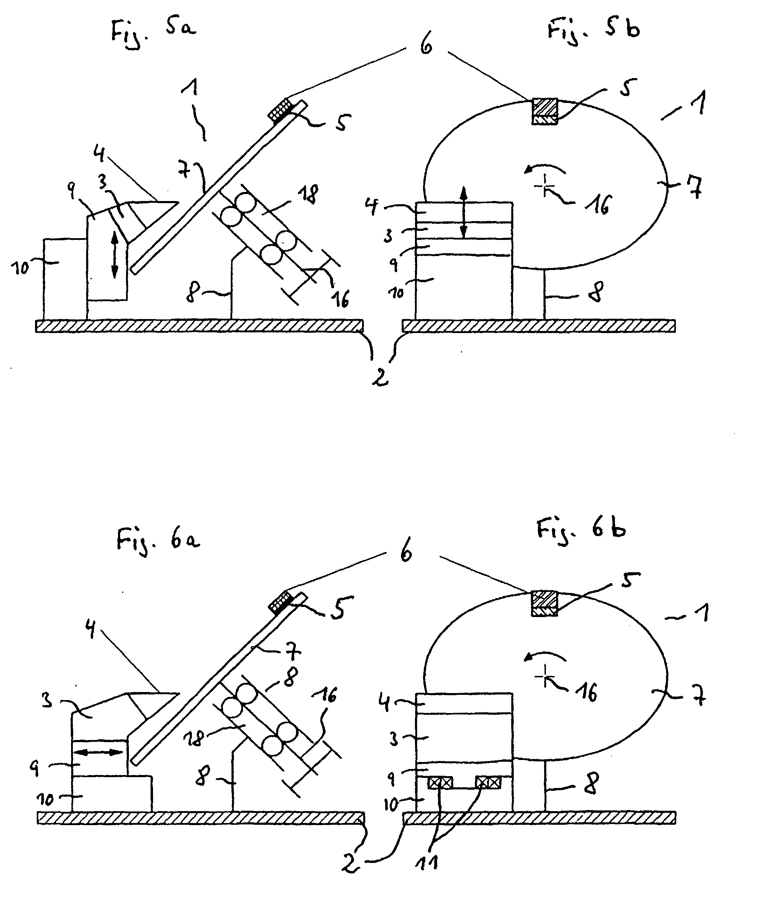

Die Figur 5a zeigt eine Seitenansicht des Scheiben-Mikrotoms 1 gemäß der Figur 4a, wobei hier der Zustellschlitten 9 senkrecht zum Grundbett 2 des Scheiben-Mikrotoms 1 verstellbar am Basisteil 10 angeordnet ist. Auch hier ist sichergestellt, daß die Schneide des Messers 4 über den Zustellschlitten 9 parallel zur Scheibe 7 bewegbar ausgebildet ist.

Die Figur 5b zeigt eine Vorderansicht des Mikrotoms 1 gemäß der Figur 5a mit dem Basisteil 10 und dem daran angeordneten und senkrecht zum Grundbett 2 beweglich ausgestatteten Messerhalter 3.

Die Figur 6a zeigt eine Seitenansicht des Scheiben-Mikrotoms 1 gemäß der Figuren 4a und 5a, wobei hier der Zustellschlitten 9 parallel zum Grundbett 2 des Scheiben-Mikrotoms 1 verschiebbar am Basisteil 10 angeordnet ist. Der Zustellschlitten 9 kann selbstverständlich mit dem Basisteil 10 eine gemeinsame Baueinheit bilden und, wie in der Figur 1a dargestellt, direkt am Grundbett 2 des Mikrotoms 1 befestigt sein.

Die Figur 6b zeigt eine Vorderansicht des Scheiben-Mikrotoms 1 gemäß der Figur 6a, wobei hier die im Zustellschlitten 9 integrierten Linearführungen 11 zur Verschiebung des Messerhalters 3 mit dargestellt sind. Diese Linearführungen 11 sind selbstverständlich in allen anderen dargestellten Ausführungsbeispielen ebenfalls zur Bewegung des Zustellschlittens 9 vorhanden und lediglich aus Gründen der Übersichtlichkeit in den anderen Figuren nicht mit dargestellt.

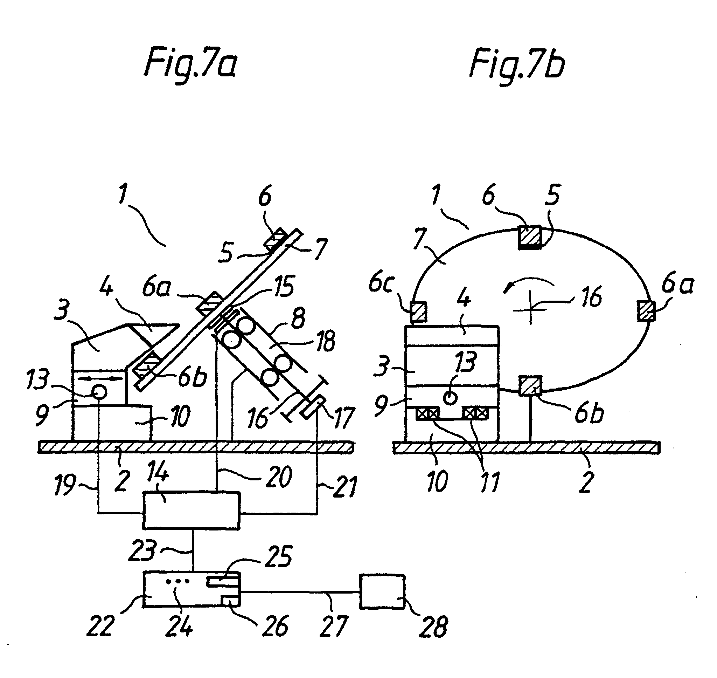

Die Figur 7a zeigt eine Seitenansicht des Scheiben-Mikrotoms 1 mit mehreren auf der Scheibe 7 angeordneten Objekten 6 und 6a-6c. In diesem Ausführungsbeispiel, welches exemplarisch die Anordnung des Zustellschlittens 9 gemäß dem Ausführungsbeispiel der Figur 6a beinhaltet, ist der Zustellschlitten 9 für den Messerhalter 3 über ein motorisches Stellmittel 13 bewegbar. Dieser Antriebsmotor 13, welcher vorzugsweise als Schrittmotor ausgebildet ist, wird elektrisch über eine Steuerleitung 19 mit einer Steuerschaltung 22 verbunden. Zwischen der Scheibe 7 und dem Gestell 8 ist ein Winkelcodierer 15 angeordnet, der die jeweilige Drehstellung der Scheibe 7 mit den darauf angeordneten Objekten 6 erfaßt und über eine Steuerleitung 20 diese Daten an die Steuerschaltung 14 abgibt. Als Antrieb für die Drehachse 16 ist ein Motor 17 vorgesehen, der ebenfalls elektrisch über eine Steuerleitung 21 mit der Steuerschaltung 14 verbunden ist: Selbstverständlich kann der Winkelcodierer 15 zur Ermittlung der Scheibenstellung auch in dem motorischen Antrieb 17 integriert sein, bzw. der Motor 17 wird als Schrittmotor ausgebildet. In einer weiteren Ausgestaltung der Erfindung kann anstelle des Winkelcodierers 15 auch eine Lichtschranke verwendet werden, um die Stellung des Objekthalters 5 zum Schneidmesser zu erkennen.

An die Steuerschaltung 14 ist über eine Steuerleitung 23 ein Bedienpult 22 angeschlossen, welches mit Wahltasten 24, einer Anzeigevorrichtung und einer Schnittstelle 26 zum Anschließen eines externen Rechners 28 über eine Steuerleitung 27 ausgestattet ist.

Zum Anschneiden, gleichzeitig oder nacheinander, der dargestellten vier Objekte 6-6c wird über die entsprechende Taste 24 am Bedienpult 22 der Schrittmotor 13 angesteuert, um das Messer 4 auf die Oberfläche der Objekte 6 -6c zuzustellen.

Dabei kann vorgesehen sein, daß die Scheibe 7 mit dem vorgewählten Objekthalter 6 zunächst in den Bereich des Schneidmessers 4 dreht und dort anhält. Danach wird das Messer 4 auf die Oberfläche des Objektes 6 zugestellt und eventuell noch ausgerichtet. Dabei kann vorgesehen sein, daß diese Stellung reproduzierbar abgespeichert wird. Es ist danach möglich, diese Einstellung für einen weiteren Objekthalter vorzunehmen und und auch hier die entsprechende Einstellung abzuspeichern.

Nach dem Erreichen der Ausgangsstellung des Schneidmessers 4, wird über das Bedienpult 22 und die Steuerschaltung 14 der Antriebsmotor 17 für die Scheibe 7 eingeschaltet. Nachdem der Motor 17 seine Solldrehzahl erreicht hat, welche über den Winkelcodierer 15 ermittelbar ist, wird über die Steuerschaltung 14 der Stellmotor 13 entsprechend der am Bedienpult 22 vorgewählten Schnittdicke mit Strom beaufschlagt. Nach einem erfolgten Schnitt des Objektes 6 oder nachdem alle Objekte 6 und 6a-6c geschnitten wurden, wird der Schrittmotor 13 wieder mit Strom beaufschlagt und es erfolgt ein weitere Zustellbewegung des Schneidmessers 4 in Richtung des oder der Objekte(s) 6-6c. Wird am Bedienpult 22 ein fester Betrag für das Anschneiden der Objekte vorgewählt, wird der Motor 13 in Einzelschritten so lange mit Strom beaufschlagt bis der Gesamtbetrag des vorgewählten Anschnittes erreicht ist.

Danach wird über das Bedienpult 22 die jeweilige Schnittdicke für das Objekt 6 oder die einzelnen Objekte 6-6c vorgewählt und dieser Betrag über die Anzeigevorrichtung 25 dargestellt. Der eigentliche Schnittvorgang zur Herstellung der Dünnschnitte kann dann gestartet werden.

Über den Winkelcodierer 15 und die Steuerschaitung 14 läßt sich die Drehzahl der Scheibe 7 und somit die Schnittgeschwindigkeit bestimmen. Die für derartige Dünnschnitte erforderliche Schnittgeschwindigkeit ist abhängig von der eingestellten Schnittdicke, dem zu schneidenden Präparat und dem verwendeten Messer. Aus diesem Grund ist vorgesehen, daß über das Bedienpult 22 eine Soll-Schnittgeschwindigkeit vorgewählt werden kann. Wird diese Soll-Schnittgeschwindigkeit während des Schnittes nicht eingehalten, d.h. der Winkelcodierer liefert entsprechend weniger Impulse während des Schnittvorganges, wird die Drehzahl des Motors 17 automatisch entsprechend erhöht.

Durch die Kontrolle der Solldrehzaht der Scheibe 7 über den Winkelcodierer 15 kann außerdem die Zustellung des Schneidmessers 4 zum Anschneiden des Objektes 6 vereinfacht werden. Der Motor 13 des Zustellschlittens 9 wird so lange mit Strom beaufschlagt, bis ein erstes Anschneiden des Objektes 6 und damit eine geringfügige Abweichung der Solldrehzahl/Sollgeschwindigkeit der Scheibe 7 von dem Winkelcodierer 15 registriert wird. Diese Abweichung wird als Signal für den beginnenden Anschnittvorgang verwendet und die Soll-Drehzahl der Scheibe bzw. die Schnittgeschwindigkeit entsprechend angepaßt.

Nach einem erfolgtem Anschnitt der Probe(n) wird über die entsprechende Taste 24 am Bedienpult 22 (oder auch automatisch) der Schnittvorgang gestartet werden. Dabei kann die Anzahl der durchzuführenden Schnitte am Bedienpult 22 vorgewählt werden.

Es ist femer vorgesehen, daß über das Bedienpult 22, bei mehreren auf der Scheibe 7 vorhandenen Objekten 6-6c, einzelne Objekte zum Schneiden vorgewählt bzw. eine Reihenfolge der zu schneidenden Objekte 6-6c festgelegt werden kann. Dazu wird nach dem erfolgten Anschneiden der Objekte die jeweilige Stellung des Schneidmessers, bzw. des Zustellschlitten 9 als 0-Stellung abgespeichert.

Diese Festlegung kann kann beispielsweise dadurch erfolgen, daß die Einzelschritte zum Ansteuern des Schrittmotors 13 in der Steuerschaltung gezählt werden oder ein zusätzlicher Codierer zur Ermittlung der Stellung des Zustellschlittens 9 angeordnet wird.

Über die Steuerschaltung 14 wird dann beim Schneidvorgang das Schneidmesser 4 aus dieser abgespeicherten 0-Stellung auf das oder die ausgewählten Objekte 6-6c zugestellt und nach dem erfolgten Schnitt in diese 0-Stellung wieder zurückgestellt. Dabei wird fortlaufend die Lage der Objekte bzw. die Drehstellung der Scheibe 7 zum Schneidmesser 4 von dem Winkelcodierer 15 ermittelt. Dabei ist vorgesehen, daß die Drehzahl der Scheibe 7 außerhalb des Schneidvorganges höher ist, als während des Schneidvorganges. Damit wird eine schnelle Zustellung des Objektes zum Schneidmesser erreicht, wobei während des Schneidvorganges eine vorteilhafte langsame Schneidbewegung gewährleistet ist.

Über das Bedienpult 22 und die Steuerschaltung 14 lassen sich einzelne Objekte 6-6c zum Schneiden wahlweise gleichzeitig oder auch nacheinander vorwählen. Damit wird erreicht, daß ein einmal bestücktes Mikrotom 1 eine Vielzahl von Schnitten automatisch gesteuert herstellen kann, ohne daß die Bedienperson in den Schneidvorgang eingreifen muß. Dies ist insbesondere dann von großem Vorteil, wenn das Mikrotom beispielsweise in einem gekapselten Kryostaten angeordnet ist. Ein Objektwechsel bei Kyrostaten ist sehr zeitaufwendig, da in den meisten Fällen der Kryostat abgetaut und der Kälteverlust beim Öffnen des Gerätes zunächst kompensiert werden muß.

Es liegt natürlich im Rahmen der vorliegenden Erfindung, wenn anstelle der 4 beschriebenen Objekthalter 6 nur ein einziger auf der Scheibe angeordnet ist. Es hat sich von Vorteil erwiesen, wenn über die Steuerschaltung beim Objektwechsel, beispielsweise nach erfolgtem Tastendruck an dem Steuerpult, immer eine besondere Übergabestellung automatisch angefahren wird. Diese Übergabestellung liegt in der 3 Uhr-Position, gemäß der Position des Objekthalters 6a in der Figur 7b. Damit wird erreicht, daß der Präparatwechsel möglichst weit vom Messer 4 entfernt durchgeführt wird und somit die Verletzungsgefahr minimiert wird. In dieser definierten Übergabeposition kann selbstverständlich auch ein automatischer Objekthalter- bzw. Präparatwechsel stattfinden.

Zur Integration des Scheiben-Mikrotoms 1 in eine übergeordnete Baueinheit, beispielsweise einen Kryostaten, ist an dem Bedienpult 22 oder wahlweise an der Steuerschaltung 14 eine Schnittstelle 26 vorgesehen, über die ein externer Rechner 28 über eine Steuerleitung 27 angeschlossen werden kann. Der externe Rechner 28 kann dann die Funktionen des Bedienpultes 22 übernehmen. Über gespeicherte Programme können dann alle Funktionen des Scheiben-Mikrotoms 1 automatisch gesteuert werden und zusätzlich die weiteren Funktionen von übergeordneten Einheiten, wie beispielsweise einem Kryostaten.

Die Figur 7b zeigt eine Seitenansicht des Ausführungsbeispiels gemäß der Figur 7a, mit den vier auf der Scheibe angeordneten Objekten 6 und 6a-6c. Es ist natürlich möglich, eine davon abweichende Anzahl von Objekten auf der Scheibe anzuordnen. Es hat sich jedoch gezeigt, daß die Objekte vorteilhafterweise symmetrisch auf der Scheibe angeordnet werden, um eventuelle Unwuchten bei der Scheibendrehung auszuschließen. Andernfalls müssen auf der Scheibe entsprechende Ausgleichsgewichte zur Kompensation der Unwucht angeordnet werden. Dies kann beispielsweise dadurch erfolgen, daß ein derartiges Ausgleichsgewicht verschiebbar auf der Scheibe angeordnet ist. Dabei kann sich die Verschieberichtung von der Drehachse 16 zum Rand der Scheibe 7 erstrecken. Wird das Ausgleichsgewicht bei einer derartigen Anordnung über eine Feder vorgespannt, läßt sich eine automatische Korrektur der Unwucht, weitgehend unabhängig von der Masse des zu schneidenden Objektes, erreichen. Femer ist es natürlich auch mögtich, das Ausgleichsgewicht am Rand der Scheibe 7 verschiebbar anzuordnen.

Die zum Ausführungsbeispiel gemäß der Figur 7a beschriebenen automatischen/motorischen Funktionen sind natürlich nicht auf diese Ausführung beschränkt, sondern können in analoger Art und Weise auch auf die anderen Ausführungsbeispiele übertragen werden. Selbstverständlich ist es möglich, einzelne automatische/motorische Funktionen auch bei den anderen Arten von Mikrotomen zu verwenden.

Ferner ist es möglich, das Schneidmesser auf der Scheibe vorzusehen und den oder die Objekthalter auf dem Grundbett. Außerdem kann die Scheibe auch selbst als Messer ausgebildet sein, wobei dann der Schnittvorgang durch eine Bewegung der Scheibe bzw. durch eine Bewegung des Objektes durchgeführt wird.

In einer weiteren Ausgestaltung der Erfindung können die Objekthalter auch nebeneinander in Richtung der Drehachse der Scheibe angeordnet werden. Dabei können einzelne oder auch mehrere Objekte gleichzeitig oder auch nacheinander mit unterschiedlichen Schnittgeschwindigkeiten geschnitten werden.

In einer weiteren Ausgestaltung der Erfindung ist am Messerhalter des Mikrotoms eine an sich bekannte Schnittstreckeinrichtung vorgesehen sein. Dieser ist ein oder auch mehrere Transportbänder zugeordnet sein, die über einen Antriebsmotor bewegt werden. Der oder die Motoren können elektrisch mit der Steuerschaltung oder der Rechnereinheit verbunden sein, um in Abhängigkeit vom vorgewählten Programm zur automatischen Ablaufsteuerung mit Strom beaufschlagt zu werden.

Das rotierende Bauelement ist in den Ausführungsbeispielen als Scheibe 7 beschrieben und dargestellt. Es liegt natürlich im Rahmen der Erfindung anstelle einer Scheibe einen rotierenden Arm o.ä. zu verwenden. Aus Sicherheitsgründen ist es jedoch vorteilhaft, wenn das rotierende Bauelement zumindest eine Abdeckung, beispielsweise in Form einer Scheibe aufweist.

### Bezugszeichenliste

- 1 -: Scheiben-Mikrotom
- 2 -: Grundbett
- 3 -: Messerhalter
- 4 -: Schneidmesser
- 5 -: Objekthalter
- 6 -: Objekt
- 6a-c: -weitere Objekte
- 7 -: Scheibe
- 8 -: Gestell
- 9 -: Zustellschlitten
- 10 -: Basisteil
- 11 -: Linearführung
- 12 -: Lagerbock
- 13 -: motorischer Antrieb für 9
- 14 -: Steuerschaltung
- 15 -: Winkelcodierer
- 16 -: Drehachse von 7
- 17 -: motorischer Antrieb von 7
- 18 -: Wälzlager
- 19 -: Steuerleitung 9-14
- 20 -: Steuerleitung 15-14
- 21 -: Steuerleitung 17-14
- 22 -: Bedienpult
- 23 -: Steuerleitung 22-14
- 24 -: Wahltasten
- 25 -: Anzeigevorrichtung
- 26 -: Schnittstelle
- 27 -: Steuerleitung 28-14
- 28 -: Rechnereinheit

## Patentansprüche

1. Mikrotom (1) zur Herstellung von Dünnschnitten für die Mikroskopie, mit einem Grundbett (2), einem Messerhalter (3) zur Aufnahme eines Schneidmessers (4) und mit einem Objekthalter (5) zur Aufnahme des zu schneidenden Objekts (6), wobei der Schneidvorgang durch eine Relativbewegung zwischen dem Objekt (6) und dem Schneidmesser (4) in einer Ebene ausgeführt wird und zur Erzeugung der Relativbewegung ein rotierendes Bauelement (7) mit einem Antriebsmotor (17) vorgesehen ist, **dadurch gekennzeichnet, daß** die Drehachse des rotierenden Bauelements (7) schräg zum Grundbett (2) angeordnet und zur Einstellung der Schnittdicke ein Zustellschlitten (9) mit einer Linearführung vorgesehen ist, wobei der Zustellschlitten (9) über einen Zustellmotor (17) und eine damit verbundene Steuerschaltung (14) bewegbar ausgebildet ist.

2. Mikrotom (1) nach Anspruch 1, **dadurch gekennzeichnet, dass** der Objekthalter (5) am rotierenden Bauelement (7) angeordnet ist.

3. Mikrotom (1) nach Anspruch 1, **dadurch gekennzeichnet, dass** der Messerhalter (3) am rotierenden Bauelement (7) angeordnet ist.

4. Mikrotom (1) nach einem der Ansprüche 1 bis 3, **dadurch gekennzeichnet, dass** das rotierende Bauelement (7) mit dem Zustellschlitten (9) verbunden ist.

5. Mikrotom (1) nach einem der Ansprüche 1 bis 3, **dadurch gekennzeichnet, daß** der Messerhalter (3) mit dem Zustellschlitten (9) verbunden ist.

6. Mikrotom (1) nach einem Ansprüche 1 bis 3, **dadurch gekennzeichnet, daß** der Objekthalter (5) zur Einstellung der Schnittdicke mit dem Zustellschlitten (9) verbunden ist.

7. Mikrotom (1) nach einem der Ansprüche 1 bis 6, **dadurch gekennzeichnet, dass** der Zustellschlitten (9) längsverschieblich zum Grundbett (2) gelagert ist.

8. Mikrotom (1) nach einem der Ansprüche 1 bis 6, **dadurch gekennzeichnet, dass** der Zustellschlitten (9) senkrecht zum Grundbett (2) verschieblich gelagert ist.

9. Mikrotom (1) nach einem der Ansprüche 1 bis 6, **dadurch gekennzeichnet, dass** der Zustellschlitten (9) schräg zum Grundbett (2) verschieblich gelagert ist.

10. Mikrotom (1) nach mindestens einem der vorherigen Ansprüche, **dadurch gekennzeichnet, daß** das rotierende Bauelement als Scheibe (7) ausgebildet ist.

11. Mikrotom (1) nach mindestens einem der vorherigen Ansprüche, **dadurch gekennzeichnet, daß** am rotierenden Bauelement (7) mehrere Objekthalter (5) nebeneinander angeordnet sind.

12. Mikrotom (1) nach mindestens einem der vorherigen Ansprüche, **dadurch gekennzeichnet, daß** am rotierenden Bauelement (7) der Messerhalter (3) angeordnet ist und um das rotierende Bauelement (7) mehrere Objekthalter (5) gruppiert sind.

13. Mikrotom (1) nach mindestens einem der vorherigen Ansprüche, **dadurch gekennzeichnet, daß** dem rotierenden Bauelement (7) ein Winkelcodierer (15) zugeordnet und der Winkelcodierer (15) mit der Steuerschaltung (14) elektrisch verbunden ist.

14. Mikrotom nach mindestens einem der vorherigen Ansprüche, **dadurch gekennzeichnet, daß** über die Steuerschaltung (14) der Zustellschlitten (9) zum Schneiden der Objekte (6) steuerbar ist.

15. Mikrotom (1) nach Anspruch 14, **dadurch gekennzeichnet, daß** über die Steuerschaltung (14) ein einzelnes Objekt (6) oder die Reihenfolge der zu schneidenden Objekte (6) individuell vorwählbar ist.

16. Mikrotom (1) nach Anspruch 14 oder 15, **dadurch gekennzeichnet, daß** über die Steuerschaltung (14) unterschiedliche Schnittdicken für ein einzelnes Objekt (6) oder unterschiedliche Schnittdicken für mehrere Objekte (6) vorwählbar sind.

17. Mikrotom (1) nach mindestens einem der vorherigen Ansprüche, **dadurch gekennzeichnet, daß** über die Steuerschaltung (14) die Geschwindigkeit des rotierenden Bauelements (7) einstellbar ist.

18. Mikrotom (1) nach Anspruch 17, **dadurch gekennzeichnet, dass** über die Steuerschaltung (14) die Geschwindigkeit des rotierenden Bauelements (7) in Abhängigkeit von der eingestellten Schnittdicke automatisch regelbar ist.

19. Mikrotom (1) nach mindestens einem der vorherigen Ansprüche, **dadurch gekennzeichnet, dass** auf dem rotierenden Bauelement (7) mehrere nebeneinander angeordnete Objekthalter (5) vorgesehen sind, so dass mehrere Objekte (6) gleichzeitig geschnitten werden.

20. Mikrotom (1) nach mindestens einem der vorherigen Ansprüche, **dadurch gekennzeichnet, dass** das rotierende Bauelement (7) als Schneidmesser ausgebildet ist.

21. Mikrotom (1) nach Anspruch 13, **dadurch gekennzeichnet, daß** der Beginn des Anschneidvorganges von dem Winkelcodierer (15) registriert wird.

22. Mikrotom (1) nach mindestens einem der vorherigen Ansprüche, **dadurch gekennzeichnet, daß** am Messerhalter (3) eine Schnittstreckeinrichtung mit mindestens einem Transportband angeordnet ist.

23. Mikrotom (1) nach Anspruch 24, **dadurch gekennzeichnet, daß** das Transportband von einem Motor angetrieben wird und der Motor mit der Steuerschaltung (14) elektrisch verbunden ist.

24. Mikrotom (1) nach mindestens einem der vorherigen Ansprüche, **dadurch gekennzeichnet, daß** die Steuerschaltung (14) mit einem Bedienpult (22) elektrisch verbunden ist.

25. Mikrotom (1) nach mindestens einem der vorherigen Ansprüche, **dadurch gekennzeichnet, daß** die Steuerschaltung (14) oder das Bedienpult (22) eine Schnittstelle (26) für den Anschluß einer Rechnereinheit (28) aufweist.

26. Mikrotom (1) nach Anspruch 25, **dadurch gekennzeichnet, daß** die Rechnereinheit (28) ein Programm zur automatischen Ablaufsteuerung aufweist.

27. Mikrotom (1) nach mindestens einem der vorherigen Ansprüche, **dadurch gekennzeichnet, daß** an dem rotierenden Bauelement (7) mindestens ein Ausgleichsgewicht zur Kompensation der Unwucht angeordnet ist.

28. Mikrotom (1) nach Anspruch 27, **dadurch gekennzeichnet, daß** das Ausgleichsgewicht verschiebbar ausgebildet ist.

## Claims

1. Microtome (1) for producing thin cuts for microscopy, with a base bed (2), a knife holder (3) for receiving a cutting knife (4) and an object holder (5) for receiving the object (6) to be cut, wherein the cutting process is executed by a relative movement between the object (6) and the cutting knife (4) in one plane and a rotating component (7) with a drive motor (17) is provided for producing the relative movement, **characterised in that** the axis of rotation of the rotating component (7) is arranged at an inclination relative to the base bed (2) and an adjusting carriage (9) with a linear guide is provided for setting the cut thickness, wherein the adjusting carriage (9) is constructed to be movable by way of an adjusting motor (17) and a control circuit (14) connected therewith.

2. Microtome (1) according to claim 1, **characterised in that** the object holder (5) is arranged at the rotating component (7).

3. Microtome (1) according to claim 1, **characterised in that** the knife holder (3) is arranged at the rotating component (7).

4. Microtome (1) according to one of claims 1 to 3, **characterised in that** the rotating component (7) is connected with the adjusting carriage (9).

5. Microtome (1) according to one of claims 1 to 3, **characterised in that** the knife holder (3) is connected with the adjusting carriage (9).

6. Microtome (1) according to one of claims 1 to 3, **characterised in that** the object holder (5) for setting the cut thickness is connected with the adjusting carriage (9).

7. Microtome (1) according to one of claims 1 to 6, **characterised in that** the adjusting carriage (9) is mounted to be longitudinally displaceable relative to the base bed (2).

8. Microtome (1) according to one of claims 1 to 6, **characterised in that** the adjusting carriage (9) is mounted to be displaceable perpendicularly relative to the base bed (2).

9. Microtome (1) according to one of claims 1 to 6, **characterised in that** the adjusting carriage (9) is mounted to be displaceable obliquely relative to the base bed (2).

10. Microtome (1) according to at least one of the preceding claims, **characterised in that** the rotating component is constructed as a disc (7).

11. Microtome (1) according to at least one of the preceding claims, **characterised in that** several object holders (5) are arranged adjacent to one another at the rotating component (7).

12. Microtome (1) according to at least one of the preceding claims, **characterised in that** the knife holder (3) is arranged at the rotating component (7) and several object holders (5) are grouped around the rotating component (7).

13. Microtome (1) according to at least one of the preceding claims, **characterised in that** an angle coder (15) is associated with the rotating component (7) and the angle coder (15) is electrically connected with the control circuit (14).

14. Microtome (1) according to at least one of the preceding claims, **characterised in that** the adjusting carriage (9) is controllable by way of the control circuit (14) for cutting the object (6).

15. Microtome (1) according to claim 14, **characterised in that** an individual object (6) or the sequence of the objects (6) to be cut is individually selectable by way of the control circuit (14).

16. Microtome (1) according to claim 14 or 15, **characterised in that** different cut thicknesses for an individual object (6) or different cut thicknesses for several objects (6) are preselectable by way of the control circuit (14).

17. Microtome (1) according to at least one of the preceding claims, **characterised in that** the speed of the rotating component (7) is settable by way of the control circuit (14).

18. Microtome (1) according to claim 17, **characterised in that** the speed of the rotating component (7) is automatically regulable by way of the control circuit (14) in dependence on the set cut thickness.

19. Microtome (1) according to at least one of the preceding claims, **characterised in that** several object holders (5) arranged adjacent to one another are provided on the rotating component (7) so that several objects (6) are cut simultaneously.

20. Microtome (1) according to at least one of the preceding claims, **characterised in that** the rotating component (7) is constructed as a cutting knife.

21. Microtome (1) according to claim 13, **characterised in that** the start of the cutting-into process is registered by the angle coder (15).

22. Microtome (1) according to at least one of the preceding claims, **characterised in that** a cut track device with at least one transport belt is arranged at the knife holder (3).

23. Microtome (1) according to claim 24, **characterised in that** the transport belt is driven by a motor and the motor is electrically connected with the control circuit (14).

24. Microtome (1) according to at least one of the preceding claims, **characterised in that** the control circuit (14) is electrically connected with the control panel (22).

25. Microtome (1) according to at least one of the preceding claims, **characterised in that** the control circuit (14) or the control panel (22) has an interface (26) for connection of a computer unit (28).

26. Microtome (1) according to claim 25, **characterised in that** the computer unit (28) has a program for automatic sequence control.

27. Microtome (1) according to at least one of the preceding claims, **characterised in that** at least one compensating weight for compensation for imbalance is arranged at the rotating component (7).

28. Microtome (1) according to claim 27, **characterised in that** the compensating weight is constructed to be displaceable.

## Revendications

1. Microtome (1) pour réaliser des coupes minces pour la microscopie, avec un bâti de base (2), un porte-couteau (3) pour recevoir un couteau tranchant (4) et avec un porte-objet (5) pour la réception de l'objet à couper (6), où l'opération de coupe est exécutée par un mouvement relatif entre l'objet (6) et le couteau tranchant (4) dans un plan et, pour produire un mouvement relatif, un composant tournant (7) avec un moteur d'entraînement (17) est prévu, **caractérisé en ce que** l'axe de rotation du composant tournant (7) est disposé en biais au bâti de base (2) et, pour le réglage de l'épaisseur de coupe, un chariot de positionnement (9) avec un guidage linéaire est prévu, où le chariot de positionnement (9) est réalisé d'une manière déplaçable par un moteur de positionnement (17) et une installation de commande (14) reliée à celui-ci.

2. Microtome (1) selon la revendication 1, **caractérisé en ce que** le porte-objet (5) est disposé au composant tournant (7).

3. Microtome (1) selon la revendication 1, **caractérisé en ce que** le porte-couteau (3) est disposé au composant tournant (7).

4. Microtome (1) selon l'une des revendications 1 à 3, **caractérisé en ce que** le composant tournant (7) est relié au chariot de positionnement (9).

5. Microtome (1) selon l'une des revendications 1 à 3, **caractérisé en ce que** le porte-couteau (3) est relié au chariot de positionnement (9).

6. Microtome (1) selon l'une des revendications 1 à 3, **caractérisé en ce que** le porte-objet (5), pour le réglage de l'épaisseur de coupe, est relié au chariot de positionnement (9).

7. Microtome (1) selon l'une des revendications 1 à 6, **caractérisé en ce que** le chariot de positionnement (9) est logé d'une manière déplaçable longitudinalement au bâti de base (2).

8. Microtome (1) selon l'une des revendications 1 à 6, **caractérisé en ce que** le chariot de positionnement (9) est logé d'une manière déplaçable verticalement au bâti de base (2).

9. Microtome (1) selon l'une des revendications 1 à 6, **caractérisé en ce que** le chariot de positionnement (9) est logé d'une manière déplaçable en biais au bâti de base (2).

10. Microtome (1) selon au moins l'une des revendications précédentes, **caractérisé en ce que** le composant tournant est réalisé sous forme de disque (7).

11. Microtome (1) selon au moins l'une des revendications précédentes, **caractérisé en ce que** plusieurs porte-objets (5) sont disposés les uns à côté des autres sur le composant tournant (7).

12. Microtome (1) selon au moins l'une des revendications précédentes, **caractérisé en ce que** le porte-couteau (3) est disposé au composant tournant (7), et plusieurs porte-objets (5) sont groupés autour du composant tournant (7).

13. Microtome (1) selon au moins l'une des revendications précédentes, **caractérisé en ce qu'**il est associé au composant tournant (7) un codeur d'angle (15) et **en ce que** le codeur d'angle (15) est relié électriquement à l'installation de commande (14).

14. Microtome (1) selon au moins l'une des revendications précédentes, **caractérisé en ce que** par l'installation de commande (14), le chariot de positionnement (9) peut être commandé pour la coupe des objets (6).

15. Microtome (1) selon la revendication (14), **caractérisé en ce que** par l'installation de commande (14), un objet individuel (6) ou l'ordre des objets à couper (6) peut être présélectionné individuellement.

16. Microtome (1) selon la revendication 14 ou 15, **caractérisé en ce que** par l'installation de commande (14), des épaisseurs de coupe différentes peuvent être présélectionnées pour un objet unique (6) ou des épaisseurs de coupe différentes pour plusieurs objets (6).

17. Microtome (1) selon au moins l'une des revendications précédentes, **caractérisé en ce que** par l'installation de commande (14), la vitesse du composant tournant (7) est réglable.

18. Microtome (1) selon la revendication 17, **caractérisé en ce que** par l'installation de commande (14), la vitesse du composant tournant (7) est réglable automatiquement en fonction de l'épaisseur de coupe réglée.

19. Microtome (1) selon au moins l'une des revendications précédentes, **caractérisé en ce que** sont prévus sur le composant tournant (7) plusieurs porte-objets (5) disposés les uns à côté des autres de telle sorte que plusieurs objets (6) sont coupés en même temps.

20. Microtome (1) selon au moins l'une des revendications précédentes, **caractérisé en ce que** le composant tournant (7) est réalisé sous forme de couteau tranchant.

21. Microtome (1) selon la revendication 13, **caractérisé en ce que** le début de l'opération de coupe est enregistré par le codeur d'angle (15).

22. Microtome (1) selon au moins l'une des revendications précédentes, **caractérisé en ce qu'**il est disposé au porte-couteau (3), une installation d'étirage et de coupe avec au moins une bande de transport.

23. Microtome (1) selon la revendication 24, **caractérisé en ce que** la bande de transport est entraînêe par un moteur et **en ce que** le moteur est relié électriquement à l'installation de commande (14).

24. Microtome (1) selon au moins l'une des revendications précédentes, **caractérisé en ce que** l'installation de commande (14) est reliée électriquement à un pupitre d'opérateur (22).

25. Microtome (1) selon au moins l'une des revendications précédentes, **caractérisé en ce que** l'installation de commande (14) ou le pupitre d'opérateur (22) présente une interface (26) pour le raccordement d'une unité de calculateur (28).

26. Microtome (1) selon la revendication 25, **caractérisé en ce que** l'unité de calculateur (28) présente un programme pour la commande automatique du déroulement.

27. Microtome (1) selon au moins l'une des revendications précédentes, **caractérisé en ce qu'**il est disposé au composant tournant (7) au moins un poids de compensation pour la compensation du balourd.

28. Microtome (1) selon la revendication 27, **caractérisé en ce que** le poids de compensation est réalisé d'une manière déplaçable.
